# EUROPEAN PATENT APPLICATION

(11) **EP 4 231 286 A1**
(43) Date of publication of application: **23.08.2023**
(21) Application number: 21903686.0
(22) Date of filing: 23.11.2021
(51) Int. Cl.: G10L 17/24, G10L 17/02, G10L 15/183, G06F 3/16, G06F 3/041, G06F 3/0484, G10L 15/22

(54) **ELECTRONIC DEVICE AND CONTROL METHOD THEREOF**

(30) Priority: 11.12.2020 KR 20200173196
(71) Applicant: Samsung Electronics Co., Ltd., Suwon-si, Gyeonggi-do 16677 (KR)
(72) Inventor: BOO, Youngjong, Suwon-si, Gyeonggi-do 16677 (KR)
(74) Representative: Appleyard Lees IP LLP
(86) International application number: PCT/KR2021/017223
(87) International publication number: WO 2022/124640

(57) **Abstract**

An electronic apparatus including an interface to communicate with an external apparatus and a processor configured to identify a command for an external apparatus based on a second audio signal received after a first audio signal identified as corresponding to a trigger command for the external apparatus, identify a state of the external apparatus based on whether the identified command is capable of being performed by the external apparatus, and transmit information, which corresponds to a function to be performed by the external apparatus by the identified command, to the external apparatus through the interface based on the identified state of the external apparatus.

## Description

### [TECHNICAL FIELD]

This application is based on and claims priority to Korean Patent Application No. 10-2020-0173196, filed on December 11, 2020, in the Korean Intellectual Property Office, the disclosure of which is herein incorporated by reference in its entirety.

The disclosure relates to an electronic apparatus, which has a speech recognition function, and a method of controlling the same.

### [BACKGROUND ART]

With popularization of speech recognition technology, it has been generalized that an electronic apparatus provides a speech recognition function. To use the speech recognition function, the electronic apparatus needs to go through processes of accessing a network, registering an account, etc. When the electronic apparatus has not been connected to the network or has not stored information needed for registering the account, a user is burdened with finding out necessary pieces of information one by one.

For a simpler registration process, when the information necessary for the registration is received from another connected electronic apparatus through the network, a problem with security may arise.

Further, when speech recognition functions of a plurality of connected electric apparatuses are used, a user may be confused about the use because of different names and speeches.

### [TECHNICAL PROBLEM]

An aspect of the disclosure is to provide an electronic apparatus, which provides a better service based on a speech recognition function, and a method of controlling the same.

### [TECHNICAL SOLUTION]

According to an embodiment of the disclosure, there is provided an electronic apparatus comprising: an interface to communicate with an external apparatus; and a processor configured to: identify a command for the external apparatus based on a second audio signal received after a first audio signal identified as corresponding to a trigger command for the external apparatus is received through the interface, identify a state of the external apparatus based on whether the identified command is performable by the external apparatus, and transmit information needed by the external apparatus to perform a function corresponding to the identified command, , to the external apparatus through the interface based on the identified state of the external apparatus.

The processor is configured to identify the state of the external apparatus based on at least one of whether the external apparatus is connected to a network or whether the external apparatus has stored authentication information.

The processor is configured to receive information about the state of the external apparatus, based on a matching result between the received first audio signal and the trigger command for the external apparatus.

The processor is configured to control the interface to transmit provisional information related to the information corresponding to the function to be performed by the external apparatus.

The provisional information comprises information usable for a preset period of time or a preset number of times.

The processor is configured to: identify another external apparatus that obtains information corresponding to the function to be performed by the external apparatus, and receive the information from the other external apparatus.

Further comprising a natural language processing engine, the processor is configured to identify the command for the external apparatus corresponding to the second audio signal based on the natural language processing engine.

Further comprising a display, the processor is configured to control the display to display a graphic user interface (GUI) showing the identified state of the external apparatus.

According to another embodiment of the disclosure, there is provided a method of controlling an electronic apparatus, comprising: identifying a command for an external apparatus based on a second audio signal received after a first audio signal identified as corresponding to a trigger command for the external apparatus; identifying a state of the external apparatus based on whether the identified command is performable by the external apparatus; and transmitting information needed by the external apparatus to perform a function corresponding to the identified command which corresponds to a function to be implemented by the external apparatus by the identified command, to the external apparatus, based on the identified state of the external apparatus.

Further comprising identifying the state of the external apparatus based on at least one of whether the external apparatus has been connected to a network or whether the external apparatus has stored authentication information.

Further comprising receiving information about the state of the external apparatus, based on a matching result between the received first audio signal and the trigger command for the external apparatus.

The transmitting the information, which corresponds to the function to be performed by the external apparatus, to the external apparatus comprises transmitting provisional information related to the information corresponding to the function to be performed by the external apparatus.

Further comprising: identifying another external apparatus that obtains information corresponding to the function to be implemented by the external apparatus; and receiving the information from the other external apparatus.

The identifying the command for the external apparatus comprises identifying a command for the external apparatus corresponding to the second audio signal based on a natural language processing engine.

Further comprising displaying a graphic user interface (GUI) showing the identified state of the external apparatus.

According to another embodiment of the disclosure, there is provided a non-transitory computer readable medium, in which a computer program comprising a code for performing a method of controlling an electronic apparatus the method comprising: identifying a command for an external apparatus based on a second audio signal received after a first audio signal identified as corresponding to a trigger command for the external apparatus; identifying a state of the external apparatus based on whether the identified command is performable by the external apparatus, and transmitting information needed by the external apparatus to perform a function corresponding to the identified command, to the external apparatus, based on the identified state of the external apparatus.

### [ADVANTAGEOUS EFFECTS]

According to an embodiment of the disclosure, even when an apparatus has not been connected to a network or lacks information necessary for performing a function, it is possible to provide a service through connection with another apparatus based on a speech recognition function. Therefore, a user can use the function without going through a separate apparatus-registration process, thereby promoting user convenience.

### [DESCRIPTION OF DRAWINGS]

FIG. 1 illustrates the whole system according to an embodiment of the disclosure.
FIG. 2 is a block diagram of an electronic apparatus according to an embodiment of the disclosure.
FIG. 3 is an operation flowchart of an electronic apparatus according to an embodiment of the disclosure.
FIG. 4 is an operation flowchart of an electronic apparatus according to an embodiment of the disclosure.
FIG. 5 illustrates operations of an electronic apparatus according to an embodiment of the disclosure.
FIG. 6 illustrates operations of an electronic apparatus according to an embodiment of the disclosure.
FIG. 7 illustrates an operation flowchart of an electronic apparatus according to an embodiment of the disclosure.
FIG. 8 illustrates operations of an electronic apparatus according to an embodiment of the disclosure.
FIG. 9 illustrates operations of an electronic apparatus according to an embodiment of the disclosure.
FIG. 10 illustrates an operation flowchart of an electronic apparatus according to an embodiment of the disclosure.

### [BEST MODE]

Below, embodiments of the disclosure will be described in detail with reference to the accompanying drawings. In the drawings, like numerals or symbols refer to like elements having substantially the same function, and the size of each element may be exaggerated for clarity and convenience of description. However, the technical concept of the disclosure and its key components and functions are not limited to those described in the following embodiments. In the following descriptions, details about publicly known technologies or components may be omitted if they unnecessarily obscure the gist of the disclosure.

In the following exemplary embodiments, terms 'first', 'second', etc. are only used to distinguish one element from another, and singular forms are intended to include plural forms unless otherwise mentioned contextually. In the following exemplary embodiments, it will be understood that terms `comprise', 'include', 'have', etc. do not preclude the presence or addition of one or more other features, numbers, steps, operation, elements, components or combination thereof. In addition, a 'module' or a 'portion' may perform at least one function or operation, be achieved by hardware, software or combination of hardware and software, and be integrated into at least one module. In the disclosure, at least one among a plurality of elements refers to not only all the plurality of elements but also both each one of the plurality of elements excluding the other elements and a combination thereof.

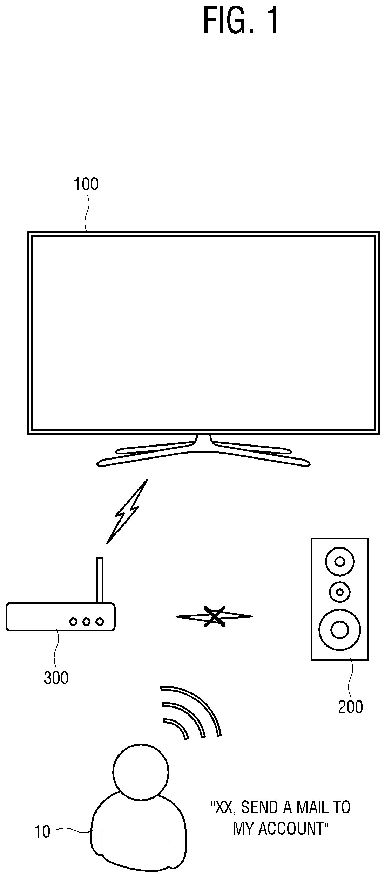

FIG. 1 illustrates the whole system according to an embodiment of the disclosure.

FIG. 1 illustrates an electronic apparatus 100, an external apparatus 200, an access point (AP) 300, and a user 10.

Referring to FIG. 1, the electronic apparatus 100 and the external apparatus 200 are, but not limited to, a television (TV) and a loudspeaker, respectively. Alternatively, the electronic apparatus 100 and the external apparatus 200 may be embodied by a display apparatus capable of displaying an image, or by an apparatus including no display.

For example, the electronic apparatus 100 and the external apparatus 200 may include a TV, an artificial intelligence (AI) assistance device (an AI loudspeaker, etc.), a computer, a smartphone, a tablet personal computer (PC), a laptop computer, various displays such as a head mounted display (HMD), a near eye display (NED), a large format display (LFD), a digital signage, a digital information display (DID), a video wall, a projector display, a quantum dot (QD) display panel, quantum dot light-emitting diodes (QLED), micro light-emitting diodes (µLED), a mini LED, etc., a camera, a camcorder, a wearable device, an electronic photo frame, an electronic frame, and so on.

Further, the electronic apparatus 100 and the external apparatus 200 may be embodied by various kinds of apparatuses such as a set-top box with no display, and the like image processing apparatus, a refrigerator, a Bluetooth loudspeaker, a washing machine, and the like home appliances, a computer and the like information processing apparatus, and so on.

However, it will be assumed that the electronic apparatus 100 and the external apparatus 200 according to an embodiment of the disclosure are capable of performing a speech recognition function.

Although the AP 300 is illustrated as a wireless local area network (WLAN) or a Wi-Fi router in FIG. 1, the AP 300 according to the disclosure may be any apparatus without limitations to its kind and name as long as it can serve as an intermediary for network connection between the electronic apparatus 100 and the external apparatus 200. A communication mode for the network connection is broadly divided into wired technology and wireless technology. The wired technology may include modes based on a telephone line, a power line, Ethernet, institute of electrical and electronics engineers (IEEE) 1394, universal serial bus(USB), etc. The wireless technology may include modes based on IEEE 802.11x WLAN, HomeRF, Bluetooth, Ultrawideband(UWB), Zigbee, HiperLAN, etc. The electronic apparatus 100 and the external apparatus 200 may be connected by an ad-hoc mode or an infra-structure mode using the AP 300. For convenience, the following description will be made on the premise that the WLAN AP 300 is used by selecting IEEE 802.1 1x WLAN as a communication mode for the network.

According to an embodiment of the disclosure, the electronic apparatus 100 has been connected to the AP 300, but the external apparatus 200has not been connected to the AP 300.

According to an embodiment of the disclosure, the user 10 wants to use the speech recognition function of the external apparatus 200. In this case, a function that requires the network connection is not carried out because the external apparatus 200has not been connected to the network.

For example, when the user 10 says "XX, send a mail to my account", the external apparatus 200 cannot perform the corresponding function because the external apparatus 200 has not been connected to the network even though the network connection is required to send the mail.

Besides, the external apparatus 200 may not perform the corresponding function when a user account requires login even though the external apparatus 200 is connected to the network.

Below, the disclosure proposes a method of performing network connection, user-account login, or etc. so that an external apparatus can perform a speech recognition function through an electronic apparatus.

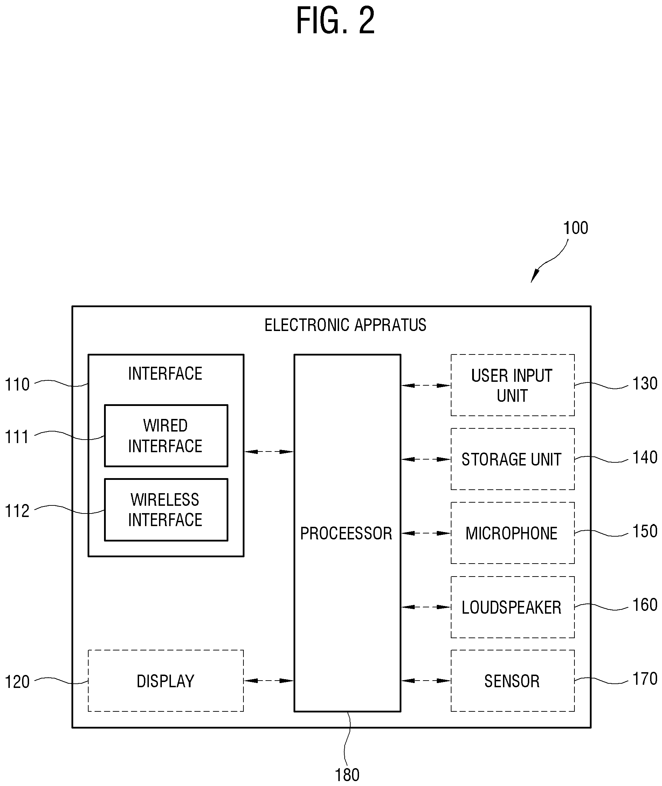

FIG. 2 is a block diagram of an electronic apparatus according to an embodiment of the disclosure.

As shown in FIG. 2, the electronic apparatus 100 may include an interface 110.

The interface 110 may include a wired interface 111. The wired interface 111 includes a connector or port to which an antenna for receiving a broadcast signal based on a terrestrial/satellite broadcast or the like broadcast standards is connectable, or a cable for receiving a broadcast signal based on cable broadcast standards is connectable. Alternatively, the electronic apparatus 100 may include a built-in antenna for receiving a broadcast signal. The wired interface 111 may include a connector, a port, etc. based on video and/or audio transmission standards, like an HDMI port, DisplayPort, a DVI port, a thunderbolt, composite video, component video, super video, syndicat des constructeurs des appareilsradiorécepteurs et téléviseurs (SCART), etc. The wired interface 111 may include a connector, a port, etc. based on universal data transmission standards like a universal serial bus (USB) port, etc. The wired interface 111 may include a connector, a port, etc. to which an optical cable based on optical transmission standards is connectable. The wired interface 111 may include a connector, a port, etc. to which an external microphone or an external audio device including a microphone is connected, and which receives or inputs an audio signal from the audio device. The wired interface 111 may include a connector, a port, etc. to which a headset, an ear phone, an external loudspeaker or the like audio device is connected, and which transmits or outputs an audio signal to the audio device. The wired interface 111 may include a connector or a port based on Ethernet or the like network transmission standards. For example, the wired interface 111 may be embodied by a local area network (LAN) card or the like connected to a router or a gateway by a wire.

The wired interface 111 is connected to a set-top box, an optical media player or the like external apparatus or an external display apparatus, a loudspeaker, a server, etc. by a cable in a manner of one to one or one to N (where, N is a natural number) through the connector or the port, thereby receiving a video/audio signal from the corresponding external apparatus or transmitting a video/audio signal to the corresponding external apparatus. The wired interface 111 may include connectors or ports to individually transmit video/audio signals.

Further, according to an embodiment, the wired interface 111 may be embodied as built in the electronic apparatus 100, or may be embodied in the form of a dongle or a module and detachably connected to the connector of the electronic apparatus 100.

The interface 110 may include a wireless interface 112. The wireless interface 112 may be embodied variously corresponding to the types of the electronic apparatus 100. For example, the wireless interface 112 may use wireless communication based on radio frequency (RF), Zigbee, Bluetooth, Wi-Fi, ultra-wideband (UWB), near field communication (NFC), etc. The wireless interface 112 may be embodied by a wireless communication module that performs wireless communication with an access point (AP) based on Wi-Fi, a wireless communication module that performs one-to-one direct wireless communication such as Bluetooth, etc. The wireless interface 112 may wirelessly communicate with a server on a network to thereby transmit and receive a data packet to and from the server. The wireless interface 112 may include an infrared (IR) transmitter and/or an IR receiver to transmit and/or receive an IR signal based on IR communication standards. The wireless interface 112 may receive or input a remote control signal from a remote controller or other external devices, or transmit or output the remote control signal to other external devices through the IR transmitter and/or IR receiver. Alternatively, the electronic apparatus 100 may transmit and receive the remote control signal to and from the remote controller or other external devices through the wireless interface 112 based on Wi-Fi, Bluetooth or the like other standards.

The electronic apparatus 100 may further include a tuner to be tuned to a channel of a received broadcast signal, when a video/audio signal received through the interface 110 is a broadcast signal.

When the electronic apparatus 100 is embodied by a display apparatus, the electronic apparatus 100 may include a display 120. The display 120 has a light-receiving structure like a liquid crystal type or a light-emitting structure like an OLED type. For example, when the display 120 is of the liquid crystal type, the display 120 includes a liquid crystal display (LCD) panel, a backlight unit for emitting light, a panel driving substrate for driving the liquid crystal of the LCD panel.

The electronic apparatus 100 may include a user input unit 130. The user input unit 130 includes various kinds of input interface circuits for receiving a user input. The user input unit 130 may be variously embodied according to the kinds of electronic apparatus 100, and may, for example, include mechanical or electronic buttons of the electronic apparatus 100, a remote controller separated from the electronic apparatus 100, an input unit of an external device connected to the electronic apparatus 100, a touch pad, a touch screen installed in the display 120, etc.

The electronic apparatus 100 may include a storage unit 140. The storage unit 140 is configured to store digitalized data. The storage unit 140 includes a nonvolatile storage which retains data regardless of whether power is on or off, and a volatile memory to which data to be processed by the processor 180 is loaded and which retains data only when power is on. The storage includes a flash- memory, a hard-disc drive (HDD), a solid-state drive (SSD) a read only memory (ROM), etc. and the memory includes a buffer, a random access memory (RAM), etc.

The storage unit 140 may be configured to store information about an AI model including a plurality of layers. Here, to store the information about the AI model is to store various pieces of information related to operations of the AI model, for example, information about the plurality of layers included in the AI model, information about parameters (e.g., a filter coefficient, a bias, etc.) used in the plurality of layers, etc. For example, the storage unit 140 may be configured to store information about an AI model learned to obtain upscaling information of an input image (or information related to speech recognition, information about objects in an image, etc.) according to an embodiment. However, when the processor is embodied by hardware dedicated for the AI model, the information about the AI model may be stored in a built-in memory of the processor.

The electronic apparatus 100 may include a microphone 150. The microphone 150 collects a sound of an external environment such as a user's speech. The microphone 150 transmits a signal of the collected sound to the processor 180. The electronic apparatus 100 may include the microphone 150 to collect a user's speech, or receive a speech signal from an external apparatus such as a smartphone, a remote controller with a microphone, etc. through the interface 110. The external apparatus may be installed with a remote control application to control the electronic apparatus 100 or implement a function of speech recognition, etc. The external apparatus with such an installed application can receive a user's speech, and perform data transmission/reception and control through Wi-FiBT or infrared communication with the electronic apparatus 100, and thus a plurality of interface units 110 for the communication may be present in the electronic apparatus 100.

The electronic apparatus 100 may include a loudspeaker 160. The loudspeaker 160 outputs a sound based on audio data processed by the processor 180. The loudspeaker 160 includes a unit loudspeaker provided corresponding to audio data of a certain audio channel, and may include a plurality of unit loudspeakers respectively corresponding to audio data of a plurality of audio channels. Alternatively, the loudspeaker 160 may be provided separately from the electronic apparatus 100, and in this case the electronic apparatus 100 may transmit audio data to the loudspeaker 160 through the interface 110.

The electronic apparatus 100 may include a sensor 170. The sensor 170 may detect the state of the electronic apparatus 100 or the surrounding states of the electronic apparatus 100, and transmit the detected information to the processor 180. The sensor 170 may include, but not limited to, at least one of a magnetic sensor, an acceleration sensor, a temperature/moisture sensor, an infrared sensor, a gyroscope sensor a positioning sensor (e.g. a global positioning system (GPS)), a barometer, a proximity sensor, and a red/green/blue (RGB) sensor (e.g. an illuminance sensor). It will be possible for those skilled in the art to intuitively deduce the functions of the sensors from their names, and thus detailed descriptions thereof will be omitted. The processor 180 may store a detected value defined by a tap between the electronic apparatus 100 and the external apparatus 200 in the storage unit 140. In the future, when a user event is detected, the processor 180 may identify whether the user event occurs or not based on whether the detected value matches the stored value.

The electronic apparatus 100 may include the processor 180. The processor 180 may include one or more hardware processors embodied by a CPU, a chipset, a buffer, a circuit, etc. mounted onto a printed circuit board, and may also be designed as a system on chip (SOC). The processor 180 includes modules corresponding to various processes, such as a demultiplexer, a decoder, a scaler, an audio digital signal processor (DSP), an amplifier, etc. when the electronic apparatus 100 is embodied by a display apparatus. Here, some or all of the modules may be embodied as the SOC. For example, the demultiplexer, the decoder, the scaler, and the like modules related to video processing may be embodied as a video processing SOC, and the audio DSP may be embodied as a chipset separated from the SOC.

The processor 180 may perform control to process input data, based on the AI model or operation rules previously defined in the storage unit 140. Further, when the processor 180 is an exclusive processor (or a processor dedicated for the AI), the processor 180 may be designed to have a hardware structure specialized for processing a specific AI model. For example, the hardware specialized for processing the specific AI model may be designed as an application specific integrated circuit (ASIC), a field-programmable gate array (FPGA), or the like hardware chip.

The output data may be varied depending on the kinds of AI models. For example, the output data may include, but not limited to, an image improved in resolution, information about an object contained in the image, a text corresponding to a speech, etc.

When a speech signal of a user's speech is obtained through the microphone 150 or the like, the processor 180 may convert the speech signal into speech data. In this case, the speech data may be text data obtained through a speech-to-text (STT) processing process of converting a speech signal into the text data. The processor 180 identifies a command indicated by the speech data, and performs an operation based on the identified command. Both the process of the speech data and the process of identifying and carrying out the command may be performed in the electronic apparatus 100. However, in this case, system load needed for the electronic apparatus 100 and required storage capacity are relatively increased, and therefore at least a part of the process may be performed by at least one server connected for communication with the electronic apparatus 100 through a network.

The processor 180 according to the disclosure may call and execute at least one instruction among instructions for software stored in a storage medium readable by the electronic apparatus 100 or the like machine. This enables the electronic apparatus 100 and the like machine to perform at least one function based on the at least one called instruction. The one or more instructions may include a code created by a compiler or a code executable by an interpreter. The machine-readable storage medium may be provided in the form of a non-transitory storage medium. Here, the 'non-transitory' merely means that the storage medium is tangible and does not include a signal (for example, an electromagnetic wave), and this term does not distinguish between cases where data is semi-permanently and temporarily stored in the storage medium.

Meanwhile, the processor 180 may use at least one of machine learning, a neural network, or a deep learning algorithm as a rule-based or AI algorithm to perform at least part of data analysis, processing, and result information generation so as to identify a command for the external apparatus 200 based on a second audio signal received after a first audio signal identified corresponding to a trigger command for the external apparatus 200, identify the state of the external apparatus 200, and perform control to transmit information corresponding to the function to be performed by the external apparatus 200 to the external apparatus 200 through the interface 110 based on the identified command and the identified state.

An AI system refers to a computer system that has an intelligence level of a human, in which a machine learns and determines by itself and recognition rates are improved the more it is used.

The AI technology is based on elementary technology by utilizing machine learning (deep learning) technology and machine learning algorithms using an algorithm of autonomously classifying/learning features of input data to copy perception, determination and the like functions of a human brain.

The elementary technology may for example include at least one of linguistic comprehension technology for recognizing a language/text of a human, visual understanding technology for recognizing an object like a human sense of vision, deduction/prediction technology for identifying information and logically making deduction and prediction, knowledge representation technology for processing experience information of a human into knowledge data, and motion control technology for controlling a vehicle's automatic driving or a robot's motion.

The linguistic comprehension refers to technology of recognizing and applying/processing a human's language/character, and includes natural language processing, machine translation, conversation system, question and answer, speech recognition/synthesis, etc. The visual understanding refers to technology of recognizing and processing an object like a human sense of vision, and includes object recognition, object tracking, image search, people recognition, scene understanding, place understanding, image enhancement, etc. The deduction/prediction refers to technology of identifying information and logically making prediction, and includes knowledge/possibility-based deduction, optimized prediction, preference-based plan, recommendation, etc. The knowledge representation refers to technology of automating a human's experience information into knowledge data, and includes knowledge building (data creation/classification), knowledge management (data utilization), etc.

For example, the processor 180 may function as both a learner and a recognizer. The learner may implement a function of generating the learned neural network, and the recognizer may implement a function of recognizing (or deducing, predicting, estimating and identifying) the data based on the learned neural network.

The learner may generate or update the neural network. The learner may obtain learning data to generate the neural network. For example, the learner may obtain the learning data from the storage unit 140 or from the outside. The learning data may be data used for learning the neural network, and the data subjected to the foregoing operations may be used as the learning data to make the neural network learn.

Before making the neural network learn based on the learning data, the learner may perform a preprocessing operation with regard to the obtained learning data or select data to be used in learning among a plurality of pieces of the learning data. For example, the learner may process the learning data to have a preset format, apply filtering to the learning data, or process the learning data to be suitable for the learning by adding/removing noise to/from the learning data. The learner may use the preprocessed learning data for generating the neural network which is set to perform the operations.

The learned neural network may include a plurality of neural networks (or layers). The nodes of the plurality of neural networks have weight values, and performs neural network calculation through calculation between the calculation result of the previous layer and the plurality of weight values. The plurality of neural networks may be connected to one another so that an output value of a certain neural network can be used as an input value of another neural network. As an example of the neural network, there are a convolutional neural network (CNN), a deep neural network (DNN), a recurrent neural network (RNN), a restricted Boltzmann machine (RBM), a deep belief network (DBN), a bidirectional recurrent deep neural network (BRDNN) and deep Q-networks.

Meanwhile, the recognizer may obtain target data to carry out the foregoing operations. The target data may be obtained from the storage unit 140 or from the outside. The target data may be data targeted to be recognized by the neural network. Before applying the target data to the learned neural network, the recognizer may perform a preprocessing operation with respect to the obtained target data, or select data to be used in recognition among a plurality of pieces of target data. For example, the recognizer may process the target data to have a preset format, apply filtering to the target data, or process the target data into data suitable for recognition by adding/removing noise. The recognizer may obtain an output value output from the neural network by applying the preprocessed target data to the neural network. Further, the recognizer may obtain a stochastic value or a reliability value together with the output value.

The learning and training data for the AI model may be created through an external server. However, it will be appreciated that, as necessary, the learning of the AI model is achieved in the electronic apparatus, and the learning data is also created in the electronic apparatus.

For example, the method of controlling the electronic apparatus 100 according to the disclosure may be provided as involved in a computer program product. The computer program product may include instructions of software to be executed by the processor 180 as described above. The computer program product may be traded as a commodity between a seller and a buyer. The computer program product may be distributed in the form of a machine-readable storage medium (for example, a compact disc read only memory (CD-ROM)) or may be directly or online distributed (for example, downloaded or uploaded) between two user apparatuses (for example, smartphones) through an application store (for example, Play Store TM). In the case of the online distribution, at least a part of the computer program product may be transitorily stored or temporarily produced in a machine-readable storage medium such as a memory of a manufacturer server, an application-store server, or a relay server.

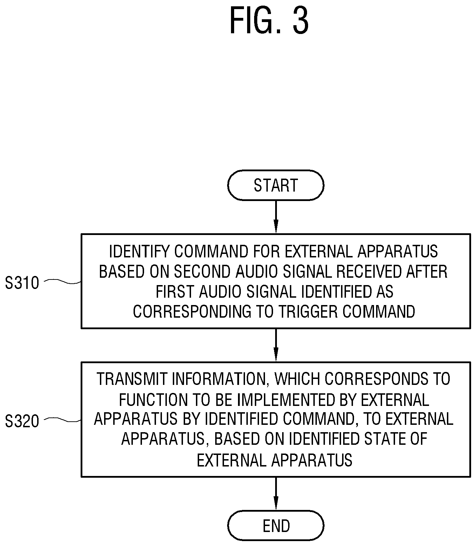

FIG. 3 is an operation flowchart of an electronic apparatus according to an embodiment of the disclosure.

According to an embodiment of the disclosure, the processor 180 identifies a command for the external apparatus 200 based on a second audio signal received after the first audio signal identified as a trigger command for the external apparatus 200(S3 10).

The processor 180 identifies whether the first audio signal corresponds to the trigger word, based on information such as a signal waveform, a length, etc. of the trigger word. In this case, the processor 180 may use information previously stored in the storage unit 140, or obtain information through communication with a server or the like. Further, the processor 180 may store or obtain not only information about the trigger command for the electronic apparatus 100 but also information about a plurality of external apparatuses which support the speech recognition function but are different in the trigger command.

When the identified command is different from the trigger command for the electronic apparatus 100, the processor 180 identifies the external apparatus 200 corresponding to the identified trigger command.

The electronic apparatus 100may include an engine for processing and recognizing the trigger command for the external apparatus 200 in addition to an engine for processing and recognizing its own trigger command, and identify the corresponding external apparatus 200 through the engine corresponding to the identified trigger command.

In this case, the processor 180 may have stored information about a manufacturer corresponding to the identified trigger command, and identify an apparatus manufactured by the corresponding manufacturer among surrounding peripheral external apparatuses. Besides, there are no limits to the method of identifying which apparatus corresponds to the identified trigger command. For example, the processor 180 may search for the surrounding external apparatuses by using a Bluetooth, IR, etc. signal in response to reception of the first audio signal, and identify whether the first audio signal matches the trigger command for the found external apparatus.

When it is identified based on the received first audio signal that the identified trigger command is the trigger command for the external apparatus 200, the processor 180 may identify that the speech recognition function of not its own apparatus, i.e., the electronic apparatus 100 but the external apparatus 200 is triggered.

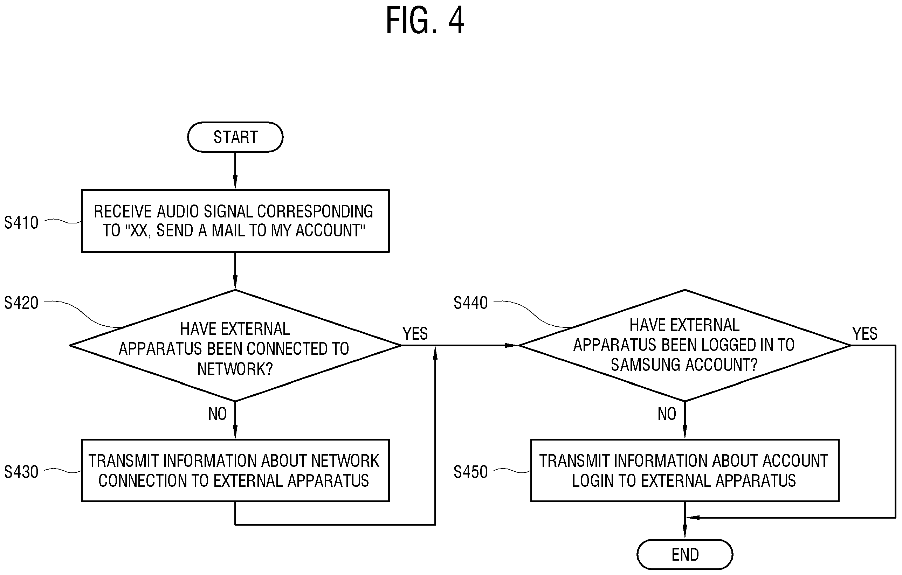

Further, it will be described later with reference to FIG. 4 that the electronic apparatus 100 and the external apparatus 200 have the same trigger command for the reasons that they are manufactured by the same manufacturer, etc.

According to an embodiment of the disclosure, it will be assumed that a subject of carrying out the identified command is the external apparatus 200, in other words, that a user speaks the command for the external apparatus 200.

The processor 180 identifies the command for the external apparatus 200 based on the second audio signal received after the first audio signal.

According to an embodiment of the disclosure, the processor 180 transmits information, which corresponds to a function to be performed by the external apparatus 200 based on the identified command, to the external apparatus 200 through the interface according to the states of the identified external apparatus(S320).

The state of the external apparatus 200 is identified based on whether it is capable of carrying out the identified command. For example, when the identified command is issued to send a mail through a specific account, the processor 180 identifies the state of the external apparatus 200 with regard to at least one of whether the external apparatus 200 has been connected to the network connection or whether the external apparatus 200 has stored authentication information. In addition, the external apparatus 200 may identify its own state, or the state of the external apparatus 200 may be identified by a third apparatus, e.g., a server or the like, and the processor 180 may receive information about the state of the external apparatus 200 through the interface 110.

For example, as described above with reference to FIG. 1, when the identified command of "Send a mail to my account" is issued, the processor 180 may identify whether the external apparatus 200 has been connected to the network or has been logged in to my account in order to send a mail.

As a method of identifying the state, for example, the processor 180 connects the electronic apparatus 100 and the external apparatus 200 by a Bluetooth, IR, etc. signal, and requests information about the state of the external apparatus 200 or receives information about the external apparatus's own state from the external apparatus 200.

In more detail, as one of low power communication technologies, a Bluetooth low energy (BLE) technology may perform communication based on two modes, broadcasting and connection. The broadcasting refers to a connectionless mode for periodically transmitting data of advertising an electronic apparatus's own presenceto surrounding apparatuses or receiving data about other apparatuses. An apparatus using this mode is divided intoa broadcaster for periodically transmitting a data packet and an observer for repetitively receiving a transmitted advertisement message. The broadcasting mode is suitable for periodically transmitting a small amount of data because the maximum size of data for transmission is possible up to 31 bytes. Further, the connection refers to a mode for 1:1 connection with one selected among the apparatuses identified by the broadcasting. When the electronic apparatus 100 identifies a user command in the received first audio signal, the processor 180 may search for the signals of the surrounding apparatuses through the BLE technology. When the electronic apparatus 100 transmits information, which is to check whether the found surrounding apparatus matches the user command, to the external apparatus 200, the external apparatus 200 may transmit confirmation information again to the electronic apparatus 100.

The information corresponding to the function to be carried out by the external apparatus 200 refers to necessary information based on the state of the external apparatus 200 among pieces of information needed for carrying out the operation corresponding to the identified command.

The processor 180 may identify the necessary information corresponding to the identified command based on the identified state, and transmit the identified information to the external apparatus 200.

For example, as shown in FIG. 1, the identified command may be "Send a mail to my account", and the processor 180 may identify that the external apparatus 200 has not been connected to the network, has not stored information about my account even though it has been connected to the network, or has not been connected to the network without storing the information. In this case, the processor 180 may transmit necessary information between the information about the network connection and the information about my account to the external apparatus 200 through the interface 110.

Besides, the external apparatus 200may identify its own state, and the processor 180 may transmit the information to the external apparatus 200 based on a signal received from the external apparatus 200 and requesting the necessary information. Alternatively, a third apparatus, for example, a server or the like may identify the state of the external apparatus 200, and the processor 180 may transmit the information to the external apparatus 200 based on a signal received from the server and requesting the necessary information.

Then, the external apparatus 200 may be connected to the network based on the received information about the network connection, or log in based on the information about by account, thereby performing the operation of sending the mail.

According to an embodiment of the disclosure, even when an apparatus has not been connected to the network or lacks information needed for performing a function, it is possible to provide a service by connection with another apparatus through speech recognition function. Therefore, a user can use the function without going through a separate apparatus registration process, thereby promoting user convenience.

FIG. 4 is an operation flowchart of an electronic apparatus according to an embodiment of the disclosure.

This drawing illustrates an example of the foregoing flowchart described with reference to FIG. 3. It will be assumed that the electronic apparatus 100 and the external apparatus 200 are products different in a trigger command from each other, in which the trigger command for the electronic apparatus 100 is "Hi, Bixby" and the trigger command for the external apparatus 200 is "XX".

The processor 180, as described in the operation S310, receives the first audio signal and the second audio signal corresponding to "XX, send a mail to my account" (S410).

The processor 180 identifies the first audio signal by the engine for processing and recognizing the trigger command, and identifies that a command corresponding to the second audio signal is a command for controlling the external apparatus 200.

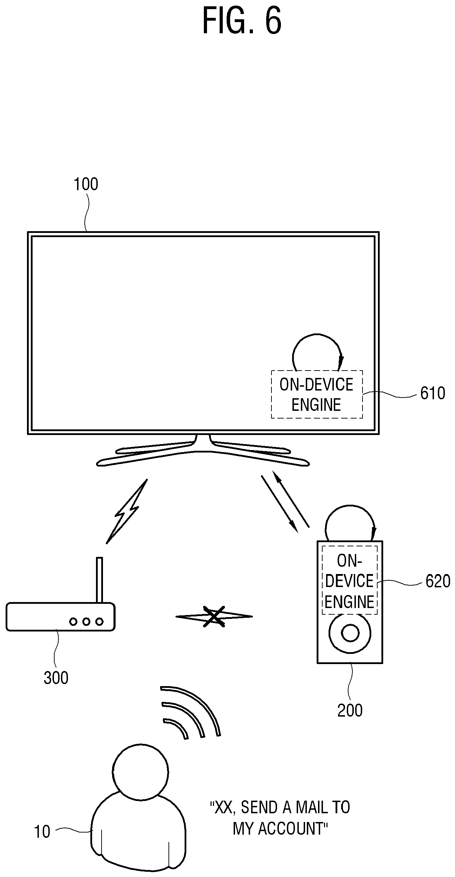

In more detail, the processor 180 may receive an audio signal corresponding to a user's utterance, and obtain text data through the STT processing process of converting speech content into text data based on the received audio signal. The processor 180 identifies a user's utterance intention in the obtained text data through the natural language processing engine. The natural language processing engine refers to an engine for natural language understanding (NLU), and the processor 180 may use the natural language processing engine to deduce not only a user's utterance but also real meaning of the user's utterance. In general, the natural language processing engine is separately provided because it has a complicated operational structure and requires a massive amount of data. However, the natural language processing engine may be provided in the electronic apparatus 100 and process a relatively simple speech recognition function. Such an on-device speech recognition engine will be described in more detail with reference to FIG. 6.

Besides, the natural language processing engine is varied in performance depending on the apparatuses, and thus the processor 180 may transmit a protocol corresponding to the trigger command for the external apparatus 200 and data about the received second audio signal to the external apparatus 200 and receive a speech recognition result from the external apparatus 200.

Meanwhile, when the electronic apparatus 100 and the external apparatus 200 have the same trigger command as they are manufactured by one manufacturer, the processor 180 needs to identify which apparatus is a subject for carrying out the operation of the command corresponding to the received second audio signal.

When the trigger commands for the electronic apparatus 100 and the external apparatus 200 are equal to each other, the subject for carrying out the operation may be identified based on a user's intention of using the function of which apparatus. For example, the processors of the apparatuses may identify utterance levels and noise levels of a received audio signal, compare signal-to-noise ratios (SNR), and identify an apparatus having the highest SNR as the subject for carrying out the operation. Below, it will be described on the assumption that the external apparatus 200 is identified as the subject for carrying out the operation based on identification results.

The processor 180, as described in the operation S320 of FIG. 3, identifies the state of the external apparatus 200, i.e., whether the external apparatus 200 has been connected to the network(S420).

Then, as described in the operation S320 of FIG. 3, when the external apparatus 200 has not been connected to the network based on the identified state of the external apparatus 200(see 'NO' in S420), the processor 180 transmits information needed for the network connection, for example, a network identification (ID), a network password, etc. to the external apparatus 200(S430).

When the external apparatus 200 has been connected to the network(see 'YES' in S420) or is connected to the network based on the information received from the processor 180, the processor 180 identifies whether the external apparatus 200has been logged in to my account (S440). When the external apparatus 200 has not been logged in to my account (see 'NO' in S440), the processor 180 transmits information needed for logging in to the account, for example, an account ID, an account password, etc. to the external apparatus 200. When the external apparatus 200 has been logged in tomy account(see 'YES' in S440), the processor 180 terminates the operation.

According to an embodiment of the disclosure, only a user'sutterance command is enough to perform the registration process, thereby providing user convenience.

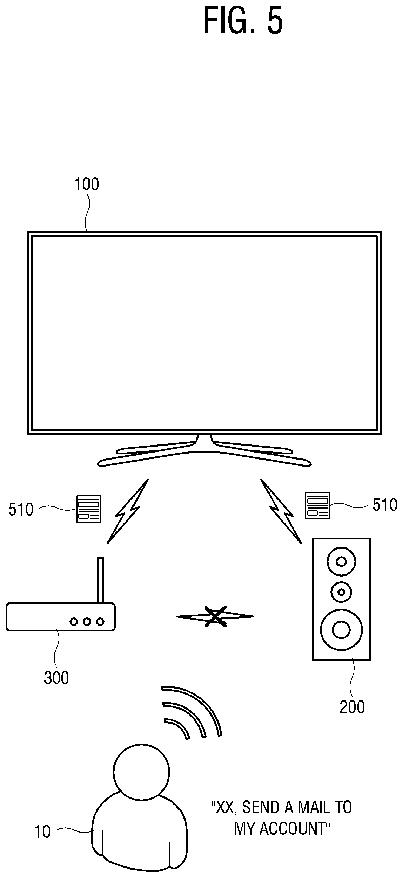

FIG. 5 illustrates operations of an electronic apparatus according to an embodiment of the disclosure.

In connection with the operation S320 of FIG. 3, this drawing shows a method of making up for a problem with security when the electronic apparatus 100 transmits the information to the external apparatus 200.

The processor 180 generates provisional information 510 with regard to information corresponding to a function to be performed by the external apparatus 200. The provisional information 510 is not the information itself corresponding to the function to be performed by the external apparatus 200, but information provisionally generated to be effectively used in operation.

For example, when an ID of `sweethome101' and a password of 'galaxy' for the network connection are transmitted as they are, a problem with security may arise. To solve this problem, the processor 180 may provisionally generates the provisional information 510 with an ID of 'add' and a password of 1234' and transmit the provisional information 510 to the external apparatus 200. In this case, when the external apparatus 200 inputs the provisional information 510 to connect with the AP 300, the AP 300 may recognize the provisional information 510 as wrong information. Therefore, the processor 180 may also transmit the provisional information 510to the AP 300, so that the external apparatus 200 can use the provisional information 510 later for the network connection.

However, even in this case, a problem with security may secondarily arise when the generated provisional information 510 is used over and over again. Therefore, the processor 180 may set the generated provisional information 510 to be usable for a preset period of time or as much as a preset number of times.

In this case, it may be difficult to transmit information such as information about the network connection, information about the user account, etc. to another apparatus due to a problem with authentication, a process of agreeing to terms and conditions for use, and therefore the processor 180 may control the display 120 to display a graphic user interface (GUI) for the authentication or a user's agreement to the terms and conditions for use.

According to an embodiment of the disclosure, it is possible to maintain security even while the password and the like personal information are transmitted, thereby safely and easily transmitting and receiving the information needed for using the apparatus.

FIG. 6 illustrates operations of an electronic apparatus according to an embodiment of the disclosure.

This drawing illustrates that the natural language processing engine is provided in the electronic apparatus 100 or the external apparatus 200.

As described above with reference to FIG. 4, the natural language processing engine and the like speech recognition engine are generally provided in the server and used through network communication. However, there have recently been developed electronic apparatuses with an on-device engine to implement their own simple speech recognition functions. In case of using the on-device engine, speech recognition results and the like are obtained without communicating with the server, thereby increasing speed and enhancing security.

When the electronic apparatus 100 includes an on-device engine 610, the processor 180, in connection with the operation S320 of FIG. 3, identifies a command corresponding to a second audio signal received based on the on-device engine 610. Further, the processor 180 may operate like the AP 300and serve as a network router for the external apparatus 200, which has not been connected to the network, or transmit user-account information or the like authentication information to the external apparatus 200 without using a server.

In this case, similarly to the description made with reference to FIG. 5, the processor 180 can generate the provisional information 510 and transmit the provisional information 510 to the external apparatus 200. The processor 180 may transmit information necessary for the external apparatus 200 in the form of an IR signal. Besides, the processor 180 may use inaudible-range communication, Bluetooth and the like transmission method.

When the external apparatus 200 includes an on-device engine 620, the external apparatus 200 can directly identify the trigger command. When the speech recognition function is triggered based on identification of the trigger command, the external apparatus may identify its own state and transmit a signal making a request for necessary information to the electronic apparatus 100 based on the identified state that network connection or account registration is needed. In other words, when the information is needed due to new installation of the external apparatus 100, initialization of previous settings for network connection, etc., the external apparatus 200 may perform the speech recognition function through communication with a connectable apparatus, i.e., the electronic apparatus 100 in an environment where the external apparatus 200 is installed, without accessing an external server or the like.

The processor 180 may transmit the requested information to the external apparatus 200 based on the signal received from the external apparatus 200. Even in this case, the electronic apparatus 100 and the external apparatus 200 can exchange the necessary information without using the server, thereby maintaining security in transmitting and receiving the information.

According to an embodiment of the disclosure, it is safe and convenient for a user because the network connection, the account registration, etc. are securely performed through the on-device engine.

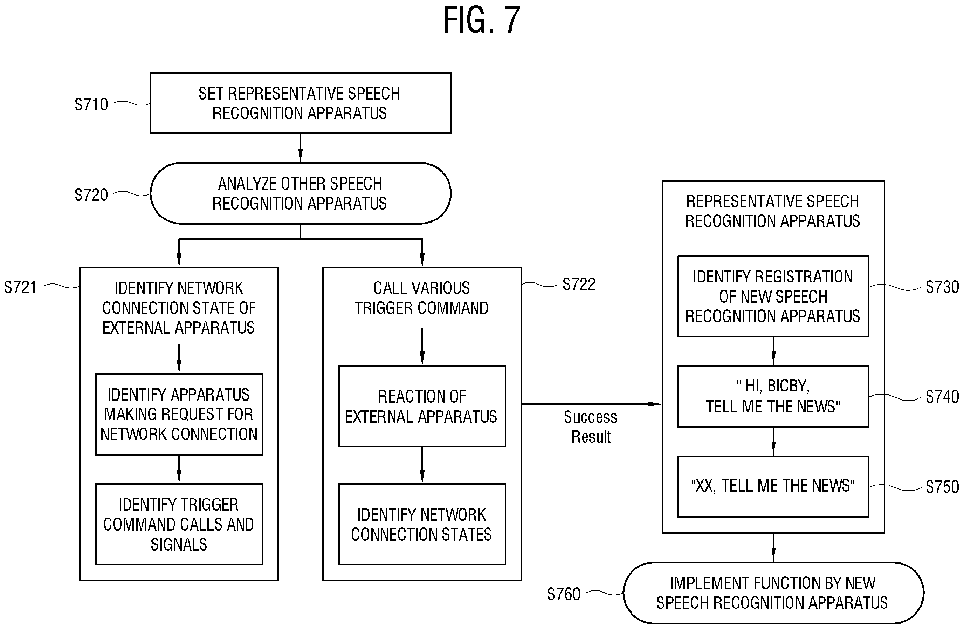

FIG. 7 illustrates an operation flowchart of an electronic apparatus according to another embodiment of the disclosure.

In this drawing, description will be made with regard to a system including a plurality of speech recognition apparatuses such as the electronic apparatus 100 and at least one external apparatus 200.

A representative apparatus, which will representatively perform a speech recognition function, is set among the plurality of speech recognition apparatuses (S710). The representative apparatus may be set by a user input, or may be set by selecting an apparatus optimized for the speech recognition function among the plurality of speech recognition apparatuses. However, there are no limits to the method of setting the representative apparatus. In case of using the user input, a user may for example say "Hi Bixby, designate the TV as the representative apparatus" or the like to set the representative apparatus. Below, it will be assumed that the electronic apparatus 100 is set as the representative apparatus.

The processor 180 analyzes other speech recognition apparatuses (S720). In more detail, the processor 180 identifies the network connection states of the surrounding external apparatuses (S721). First, the processor 180 identifies an apparatus, which makes a request for the network connection, among the external apparatuses around the electronic apparatus 100, and identifies trigger command calls and signals corresponding to the external apparatuses.

The processor 180 identifies the presence of the surrounding external apparatuses based on various trigger command calls (S722). The processor 180 identifies an external apparatus which reacts to the trigger command call, identifies whether the external apparatus has been connected to the network or not, and performs the network connection as necessary.

When the surrounding speech recognition apparatuses are completely analyzed, the processor 180 identifies registration of a new speech recognition apparatus (S730).

When an audio signal corresponding to a command is received along with the trigger command for the electronic apparatus 100, the processor 180 identifies the audio signal and performs operation corresponding to the command. In this case, instead of directly performing the operation, the processor 180 may control the previously identified and newly registered speech recognition apparatus to perform the operation corresponding to the command. Therefore, the new speech recognition apparatus can connect with the speech recognition engine and support the speech recognition function through the external apparatus, i.e., the electronic apparatus 100, without initial settings such as the network connection, etc. after installation.

For example, when the processor 180 receives a user input of "Hi Bixby, tell me the news"(S740), an external apparatus suitable for operation may be identified according to functions to be implemented or as another external apparatus is needed to perform the operation instead of the external apparatus 100 because the electronic apparatus 100 is implementing another function. Besides, the suitable external apparatus may be identified under various conditions that the electronic apparatus 100 wastefully consumes much power to implement the function, for example, there is an external apparatus that consumes less power than the electronic apparatus 100 by activating only the loudspeaker to tell the news, the electronic apparatus 100 is provided as a wireless apparatus and has too low battery power to perform the operation, etc.

The processor 180may identify an external apparatus in which the operation will be performed, and control the loudspeaker160 to output "The news will be read through XX. XX, read the news"(S750). In this case, the new speech recognition apparatus can implement the function(S760).

The processor 180 may control another external apparatus connected to the network to perform operation corresponding to a newly received user input, or may assist a disconnected external apparatus in connecting with the network and then control the external apparatus to perform the operation corresponding to the user input.

According to an embodiment of the disclosure, the surrounding apparatuses supporting the speech recognition function are used according to time or conditions, thereby being advantageous to energy consumption or user convenience. Further, a function of an external apparatus is used to support the speech recognition function and perform the operation even though the external apparatus is newly installed and does not have basic settings for using the speech recognition function, such as network connection settings, etc., thereby improving user convenience.

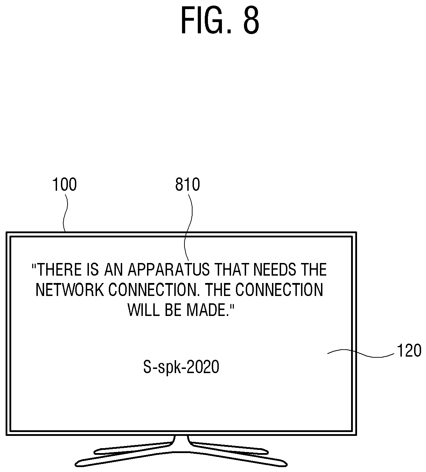

FIG. 8 illustrates operations of an electronic apparatus according to an embodiment of the disclosure.

In this drawing, the electronic apparatus 100 displays a GUI which informs a user of the states related to the external apparatus 200 described above with reference to FIGS. 3 to 7.

According to an embodiment of the disclosure, the electronic apparatus 100 further includes the display 120, and the processor 180 controls the display 120 to display a GUI 810 to show the state of the identified external apparatus 200.

For example, as shown in FIG. 8, the processor 180 may control the display 120 to display the GUI 810 of "There is an apparatus that needs the network connection. The connection will be made." and display the name of the apparatus that needs the network connection, for example, 'S-spk-2020' together. In this case, one apparatus or two or more apparatuses may need the network connection.

Besides, the processor 180 may control the display 120 to display not only the external apparatus 200 that needs the network connection but also information needed for the external apparatus 200, or additionally display a GUI for requesting a user's approval before transmitting the information.

According to an embodiment of the disclosure, it is possible to directly show current progress, the states of the surrounding external apparatuses, etc. to a user, and provide a GUI for allowing the user to control them, thereby promoting user convenience.

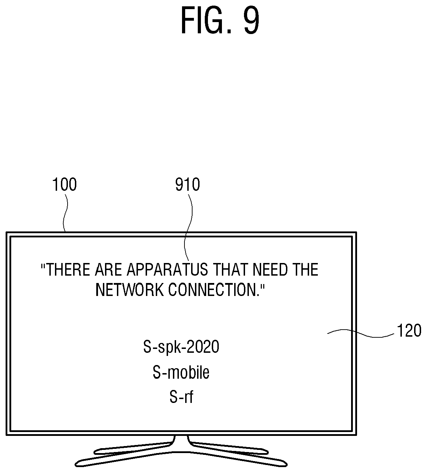

FIG. 9 illustrates operations of an electronic apparatus according to an embodiment of the disclosure.

This drawing shows that the apparatus that needs the network connection as shown in FIG. 8 is provided in plural. The electronic apparatus 100 displays a GUI that informs a user of the states related to the external apparatus 200 as described above with reference to FIGS. 3 to 7.

According to an embodiment of the disclosure, the electronic apparatus 100 further includes the display 120, and the processor 180 controls the display 120 to display a GUI 910 to show the state of the identified external apparatus 200.

For example, as shown in FIG. 9, the processor 180 may control the display 120 to display the GUI 910 of "There are apparatuses that needs the network connection." and display the names of the apparatuses that need the network connection, for example, "S-spk-2020, S-mobile, S-rf" together. In this case, the processor 180 may control the display 120 to additionally display a GUI for allowing a user to select an apparatus for the network connection among the plurality of apparatuses that need the network connection.

Besides, the processor 180 may control the display 120 to display not only the external apparatuses 200 that needs the network connection but also information needed for the external apparatuses 200, or additionally display a GUI for requesting a user's approval before transmitting the information.

According to an embodiment of the disclosure, when there are the plurality of electronic apparatuses that need the network connection, a GUI for allowing a user to control the electronic apparatuses is provided to thereby promote user convenience.

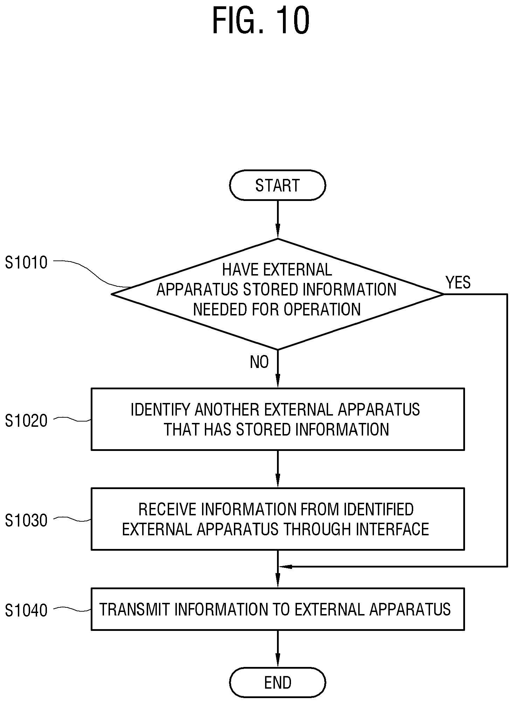

FIG. 10 illustrates an operation flowchart of an electronic apparatus according to an embodiment of the disclosure.

In connection with the operation S320 of FIG. 3, this drawing illustrates a case that the electronic apparatus 100 has not stored information which will be transmitted to the external apparatus 200 corresponding to a function.

The processor 180 identifies whether the electronic apparatus 100 has stored information corresponding to the function to be implemented in the external apparatus 200 by the command, based on the state of the identified external apparatus 200 in the operation S320 of FIG. 3 (S1010).

When the electronic apparatus 100 has stored the information (see 'YES' in S1010), the processor 180 transmits the information to the external apparatus 200 as described above in the foregoing embodiments.

When it is identified that the electronic apparatus 100 has not stored the information(see 'NO' in S1010), the processor 180 identifies another external apparatus that obtains the information(S 1020). For example, the processor 180 may identify whether other surrounding external apparatuses obtain the information or transmit a signal for requesting the information to such external apparatuses, thereby identifying the external apparatuses.

The processor 180 receives the information from other identified external apparatuses through the interface 110 (S1030). In this case, while the information is being transmitted, the provisional information 510 may be used or the on-device engine may be used to directly receive the information without using the server, as described above with reference to FIGS. 5 to 6, for the sake of security.

The processor 180 transmits the information to the external apparatus 200 based on the received information(S1040).

According to an embodiment of the disclosure, even though the electronic apparatus has not stored the information needed for the external apparatus 200, the electronic apparatus can serve as an intermediary to receive information from another external apparatus and deliver the received information to the external apparatus 200, thereby solidifying a use scenario.

## Claims

1. An electronic apparatus comprising:
an interface to communicate with an external apparatus; and
a processor configured to:
identify a command for the external apparatus based on a second audio signal received after a first audio signal identified as corresponding to a trigger command for the external apparatus is received through the interface, and
identify a state of the external apparatus based on whether the identified command is performable by the external apparatus,
transmit information needed by the external apparatus to perform a function corresponding to the identified command, to the external apparatus through the interface, based on the identified state of the external apparatus.

2. The electronic apparatus of claim 1, wherein the processor is configured to identify the state of the external apparatus based on at least one of whether the external apparatus is connected to a network or whether the external apparatus has stored authentication information.

3. The electronic apparatus of claim 1, wherein the processor is configured to receive information about the state of the external apparatus, based on a matching result between the received first audio signal and the trigger command for the external apparatus.

4. The electronic apparatus of claim 1, wherein the processor is configured to control the interface to transmit provisional information related to information corresponding to the function to be performed by the external apparatus.

5. The electronic apparatus of claim 4, wherein the provisional information comprises information usable for a preset period of time or a preset number of times.

6. The electronic apparatus of claim 1, wherein the processor is configured to:
identify another external apparatus that obtains information corresponding to the function to be performed by the external apparatus, and
receive the information from the other external apparatus.

7. The electronic apparatus of claim 1, further comprising a natural language processing engine,
wherein the processor is configured to identify the command for the external apparatus corresponding to the second audio signal based on the natural language processing engine.

8. The electronic apparatus of claim 1, further comprising a display,
wherein the processor is configured to control the display to display a graphic user interface (GUI) showing the identified state of the external apparatus.

9. A method of controlling an electronic apparatus, comprising:
identifying a command for an external apparatus based on a second audio signal received after a first audio signal identified as corresponding to a trigger command for the external apparatus;
identifying a state of the external apparatus based on whether the identified command is performable by the external apparatus; and
transmitting information needed by the external apparatus to perform a function corresponding to the identified command to the external apparatus, based on the identified state of the external apparatus.

10. The method of claim 9, further comprising identifying the state of the external apparatus based on at least one of whether the external apparatus has been connected to a network or whether the external apparatus has stored authentication information.

11. The method of claim 9, further comprising receiving information about the state of the external apparatus, based on a matching result between the received first audio signal and the trigger command for the external apparatus.

12. The method of claim 9, wherein the transmitting the information, which corresponds to the function to be performed by the external apparatus, to the external apparatus comprises transmitting provisional information related to the information corresponding to the function to be performed by the external apparatus.

13. The method of claim 12, wherein the provisional information comprises information usable for a preset period of time or a preset number of times.

14. The method of claim 9, further comprising:
identifying another external apparatus that obtains information corresponding to the function to be implemented by the external apparatus; and
receiving the information from the other external apparatus.

15. A non-transitory computer readable medium, having recorded thereon a computer program comprising a code for performing a method of controlling an electronic apparatus the method comprising:
identifying a command for the external apparatus based on a second audio signal received after a first audio signal identified as corresponding to a trigger command for the external apparatus;
identifying a state of the external apparatus based on whether the identified command is performable by the external apparatus; and
transmitting information needed by the external apparatus to perform a function corresponding to the identified command, to the external apparatus, based on the identified state of the external apparatus.
